# EUROPÄISCHE PATENTSCHRIFT

(11) **EP 3 984 869 B1**
(45) Veröffentlichungstag und Bekanntmachung des Hinweises auf die Patenterteilung: **14.05.2025**
(21) Anmeldenummer: 21201340.3
(22) Anmeldetag: 07.10.2021
(51) Int. Cl.: B62J 7/04, B62J 15/00, B62J 15/02

(54) **FAHRRAD MIT EINEM GEPÄCKTRÄGER**
BICYCLE WITH A LUGGAGE CARRIER
BICYCLETTE DOTÉE D'UN PORTE-BAGAGE

(30) Priorität: 15.10.2020 DE 102020127188
(43) Veröffentlichungstag der Anmeldung: 20.04.2022
(73) Patentinhaber: MPR GmbH & Co. KG, 95615 Marktredwitz (DE)
(72) Erfinder: Pürner, Marcus, 95615 Marktredwitz (DE)
(74) Vertreter: Friderichs, Gunther

(56) Entgegenhaltungen:
- DE-A1- 102017 000 834
- DE-A1- 102018 116 195
- DE-U1- 202018 101 779
- PEACE RICHARD: "Cube Kathmandu Hybrid Exc 625 | electric bike reviews, buying advice and news - ebiketips", EBIKETIPS, 7 June 2020 (2020-06-07), XP093172639, Retrieved from the Internet <URL:https://ebiketips.road.cc/content/reviews/electric-hybrid/cube-kathmandu-hybrid-exc-625-2429> [retrieved on 20240610]

## Beschreibung

### Gebiet der Erfindung

Die Erfindung betrifft ein Fahrrad mit einem Gepäckträger, insbesondere einem integrierten Gepäckträger.

### Hintergrund der Erfindung

In der Praxis sind zum einen Gepäckträger verbreitet, welche als Zubehörteil an einem Fahrrad angebracht werden können. Diese werden in der Regel an der Sitzstrebenbrücke festgeschraubt und mittels Streben mit der Achse oder einer Aufnahme an den Sitzstreben verbunden.

Zum anderen gibt es sogenannte integrierte Gepäckträger. Diese können als Teil des Rahmens gesehen werden. Insbesondere umfasst der Rahmen eines derartigen Fahrrads hinter den Sitzstreben ein paar weitere Streben, welche sich vom Ausfallende zum Gepäckträger hin erstrecken.

Der Gepäckträger ist stoffschlüssig, insbesondere mittels Schweißverbindungen, mit dem Rahmen verbunden.

Oft wird der Gepäckträger zur Befestigung des hinteren Radschützers genutzt. Insbesondere kann der Gepäckträger eine Brücke umfassen, an welcher der Radschützer angeschraubt wird.

Da bei integrierten Gepäckträgern keine Schraubverbindungen zum Rahmen vorhanden sind, sind diese in der Regel robuster ausgebildet als Zubehörgepäckträger und insbesondere für höhere Lasten geeignet.

Eine beabstandete Befestigung des Radschützers an einzelnen Punkten, wie am Gepäckträger und am Mittelbau, erfordert einen verhältnismäßig steif ausgebildeten Radschützer, um die Neigung des Radschützers zum Klappern während der Fahrt, insbesondere über unebenes Gelände, gering zu halten.

### Aufgabe der Erfindung

Fahrräder mit einem Radschützer und einem Gepäckträger sind aus den Dokumenten DE 20 2018 101 779 U1, DE 10 2018 116 195 A1, DE 10 2017 000 834 A1 bekannt.

Ein Fahrrad mit einem integrierten Gepäckträger ist aus folgender Veröffentlichung bekannt:
PeaceRichard: "Cube Kathmandu Hybrid. Exc 625 | electric bike reviews, buying advice and news - ebiketips",
ebiketips, 7. Juni 2020 (2020-06-07), XP093172639,
Gefunden im Internet:
   URL:https://ebiketips.road.cc/content/reviews/electrichybrid/cubekathmandu-hybrid-exc-625-2429. Dieses Dokument offenbart ein Fahrrad, umfassend einen integrierten Gepäckträger und einen Radschützer, wobei der Gepäckträger durch ein, der Krümmung des Radschützers folgendes, Profil ausgebildet ist, und wobei der Radschützer an zumindest einer Befestigungsposition des Gepäckträgers befestigt ist, wobei der Gepäckträger auf der Oberseite des Radschützers sitzt, und wobei der Gepäckträger stoffschlüssig mit dem restlichen Rahmen des Fahrrads verbunden ist.

Der Erfindung liegt demgegenüber die Aufgabe zugrunde, die Funktionalität von Radschützer und Gepäckträger weiter zu verbessern. Es ist insbesondere eine Aufgabe der Erfindung, ein Fahrrad mit einem integrierten Gepäckträger bereitzustellen, welcher robust, gleichzeitig aber auch leicht und formschön ausgebildet ist.

### Zusammenfassung der Erfindung

Die Aufgabe der Erfindung wird bereits durch ein Fahrrad mit einem Gepäckträger nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Fahrrad. Im Sinne der Erfindung werden unter einem Fahrrad auch solche mit einem elektrischen Hilfsantrieb, also insbesondere sogenannte E-Bikes und Pedelecs, verstanden.

Das Fahrrad umfasst einen Gepäckträger. Erfindungsgemäß umfasst das Fahrrad einen integrierten Gepäckträger, also einen Gepäckträger, welcher mit dem restlichen Rahmen des Fahrrads stoffschlüssig verbunden ist, insbesondere verschweißt, ist.

Weiter umfasst das Fahrrad einen Radschützer.

Gepäckträger und Radschützer sind für das hintere Rad vorgesehen.

Gemäß der Erfindung ist der Gepäckträger als ein der Krümmung des Radschützers folgendes Profil ausgebildet, wobei der Radschützer an zumindest einer Befestigungsposition des Gepäckträgers befestigt ist.

Die Erfindung setzt also an der Schnittstelle zwischen Gepäckträger und Radschützer an und sieht insbesondere vor, dass der Gepäckträger nicht vertikal vom Radschützer beabstandet über eine Brücke mit dem Radschützer verbunden ist.

Vielmehr sitzt der Gepäckträger auf der Oberseite des Radschützers und kann so zur Befestigung des Radschützers unmittelbar an dem Profil verwendet werden.

Der Gepäckträger kann so eine horizontale Aufnahme bereitstellen.

Insbesondere kann der Gepäckträger zumindest eine, vorzugsweise zwei, Schienen zur Anbringung von Fahrradtaschen bereitstellen.

Gemäß einer Weiterbildung der Erfindung ist der Gepäckträger, beispielsweise über eine Schraubverbindung, mit einem Modul verbindbar, das eine Aufnahme für ein Zubehörteil, insbesondere ein Gepäckstück, bereitstellt.

Dies hat den Vorteil, dass der Gepäckträger mit unterschiedlichen Modulen verbindbar ist, welche zur Anbringung verschiedenartiger Zubehörteile, wie beispielsweise Fahrradtaschen auf dem Gepäckträger, ruhenden Transportboxen oder einem Kindersitz ausgebildet sind.

Insbesondere kann auch das Zubehörteil selbst ein integriertes Modul umfassen, welches auf dem Gepäckträger befestigbar ist.

Das Profil ist vorzugsweise als Mittelsteg ausgebildet, welcher in einer Vertiefung des Radschützers sitzt.

So ist das Profil optisch Teil des Radschützers und stabilisiert zum anderen den Radschützer, so dass ein weniger massiver Radschützer verwendet werden kann, was wiederum Gewicht spart.

Das Profil kann insbesondere seitlich in den Radschützer übergehen, ohne dass sich eine Stufe zwischen Profil und Radschützer befindet.

Das Profil ist vorzugsweise als gebogene Metallschiene ausgebildet.

Insbesondere kann das Profil einen im Wesentlichen U-förmigen Querschnitt umfassen.

Die Oberseite des Profils ist dabei vorzugsweise nach oben ausgerichtet und kann so optisch Teil des Radschützers sein.

Die U-förmige Ausgestaltung spart ferner Gewicht.

Weiter wird durch das U-förmige Profil ein Hohlraum zwischen dem Radschützer und dem Profil ausgebildet. Dieser Hohlraum kann, wie es gemäß einer bevorzugten Ausführungsform der Erfindung vorgesehen ist, zur versteckten Integration von Befestigungskomponenten für den Radschützer genutzt werden.

Das Profil kann einen Umfang von über 20°, vorzugsweise von über 30° und besonders bevorzugt von über 50° einnehmen. Weiter nimmt das Profil gemäß einer bevorzugten Ausführungsform weniger als 180°, bevorzugt weniger als 90° und besonders bevorzugt weniger als 70° des Umfangs ein.

Der Gepäckträger besteht vorzugsweise überwiegend aus dem Profil, d.h. zumindest die Hälfte der Länge des Gepäckträgers besteht aus dem Profil.

Bei einer Weiterbildung der Erfindung geht der Gepäckträger am hinteren Ende in eine vertikale Wand über, welche zum einen als Befestigungsposition für den Radschützer und zum anderen zum Anbringen eines Reflektors genutzt werden kann.

Das hintere Ende des Gepäckträgers befindet sich vorzugsweise im Bereich der hinteren Streben, welche vorzugsweise stoffschlüssig mit dem Gepäckträger verbunden sind.

Insbesondere kann das Profil geht über ein sich nach oben erstreckendes Übergangsstück in eine vertikale Wand oder Strebe übergehen, welche vorzugsweise mit den hinteren Streben verbunden ist. Die vertikale Wand kann dabei als weitere Befestigungsposition für den Radschützer dienen.

Bei einer Weiterbildung der Erfindung ist das Profil mit einem Zwischenstück verbunden, welches sich von einem hinteren Ende des Gepäckträgers zumindest bis zu den Sitzstreben erstreckt.

Insbesondere ist das Profil mit dem Zwischenstück verschweißt.

Das Zwischenstück kann insbesondere an der Verbindungsstelle zum Gepäckträger im Wesentlichen den Querschnitt des Profils aufweisen und sodann über einen gabel- bzw. T-förmigen Abschnitt mit den Sitzstreben verbunden sein.

Diese Weiterbildung der Erfindung hat den Vorteil, dass für unterschiedliche Rahmengeometrien und insbesondere auch unterschiedliche Rahmengrößen der gleiche Gepäckträger verwendet werden kann.

Die Position des Gepäckträgers wird durch die hinteren Streben bestimmt und kann so bei Rahmen unterschiedlicher Geometrien immer gleich sein. Der unterschiedliche Abstand des vorderen Endes des Gepäckträgers kann dagegen auf einfache Weise über unterschiedlich lang ausgebildete Zwischenstücke ausgeglichen werden oder auch durch Kürzung des Zwischenstücks auf die richtige Länge.

Bei einer Ausführungsform der Erfindung ist der Radschützer an zwei Befestigungspositionen mit dem Gepäckträger verbunden.

Insbesondere ist eine vordere Befestigungsposition vorgesehen, an welcher der Radschützer mit dem Profil des Gepäckträgers, welches vorzugsweise in einer Vertiefung des Radschützers liegt, verbunden ist.

Eine derartige Verbindung kann beispielsweise über eine Schraube bereitgestellt werden, beispielsweise kann eine Schraube mit einem Senkkopf verwendet werden, welche den Vorteil hat, dass sie nicht aus dem Profil heraussteht, welches ja zugleich optisch Teil des Radschützers ist.

Die hintere Befestigungsposition kann beispielsweise eine vorzugsweise vertikal angeordnete Platte sein.

An dieser Platte kann beispielsweise eine vom Radschützer nach oben stehende Lasche befestigt, insbesondere angeschraubt werden.

Weiter kann diese vertikale Wand gleichzeitig zur Befestigung eines Reflektors genutzt werden.

Es ist insbesondere vorgesehen, dass die vertikale Wand Durchgangslöcher aufweist, in die werkzeuglos ein Reflektor eingeklipst werden kann. Dies erleichtert die Montage.

Vorzugsweise ist die vordere Befestigungsposition zumindest in Längsrichtung (entspricht Fahrrichtung) verstellbar. Auch eine Verstellung quer zur Fahrrichtung ist gemäß einer Ausführungsform der Erfindung vorgesehen. Diese kann insbesondere über einen Einsatz bereitgestellt werden, welcher querverschiebbar in einem Durchgangsloch (104) des Radschützers angeordnet ist.

Die hintere Befestigungsposition ist vorzugsweise zumindest in der Höhe verstellbar. Auch eine Verstellung quer zur Fahrtrichtung kann z.B. über Langlöcher im Radschützer bereitgestellt werden.

Vorzugsweise kann der Radschützer an der vorderen Befestigungsposition in der Höhe verstellt werden.

Dies kann z.B. über eine von außen zugängliche Stellschraube realisiert sein

Die Verstellbarkeit in Fahrrichtung kann gemäß einer Ausführungsform der Erfindung durch ein Gleitstück bereitgestellt werden, welches entlang eines Langlochs verschiebbar ist.

Das Gleitstück umfasst gemäß einer ein Gewinde aufweisen kann so mittels einer Schraube in der Höhe verschoben werden, so dass sich die Höhe des Radschützers gegenüber dem Profil des Gepäckträgers an der ersten Befestigungsposition einstellen lässt.

An der vorderen Befestigungsposition ist das Gleitstück vorzugsweise in dem Zwischenraum angeordnet, welcher durch das U-förmige Profil gebildet wird.

Weiter kann in dem Profil eine Feder, insbesondere eine Schraubenfeder oder Blattfeder, angeordnet sein, welche Profil und Radschützer gegeneinander vorspannt.

Dadurch, dass die Feder auf den Radschützer drückt, wird die Neigung des Radschützers zum Klappern reduziert, da durch die Feder ein Anstoßen des Radschützers am Profil in der Regel verhindert wird.

Vorzugsweise ist das Profil radial und/oder lateral vom Radschützer beabstandet.

Der Radschützer ist so allein an den zwei Befestigungspunkten mit dem Gepäckträger verbunden, was die Neigung des Radschützers zum Klappern weiter reduziert.

Die Offenbarung betrifft des Weiteren einen Gepäckträger, welcher für das vorstehend beschriebene Fahrrad ausgebildet ist. Der Gepäckträger kann insbesondere alle vorstehend im Zusammenhang mit dem Gepäckträger beschriebenen Merkmale aufweisen.

Insbesondere wird der Gepäckträger aus einem kreissegmentförmigen Profil mit im Wesentlichen U-förmigen Querschnitt gebildet, welches an einem hinteren Ende in einer (in bestimmungsgemäßer Einbauposition) vertikale Platte übergeht.

In der vertikalen Platte sowie in einem vorderen Bereich des Profils befinden sich Aufnahmepunkte für den Radschützers, welche insbesondere als Durchgangslöcher ausgebildet sein können.

Der Gepäckträger besteht vorzugsweise aus Metall, insbesondere aus einer Aluminiumlegierung.

Der Gepäckträger kann insbesondere als Gussteil ausgebildet sein.

Wie vorstehend beschrieben, kann der Gepäckträger selbst bereits Aufnahmen, insbesondere Schienen, zur Anbringung von Zubehörteilen umfassen.

Weiter betrifft die Offenbarung einen Radschützer, der für vorstehend beschriebenes Fahrrad ausgebildet ist.

Dieser kann insbesondere eine abschnittsweise umlaufende Vertiefung zur Aufnahme des Profils des Gepäckträgers aufweisen.

Weiter betrifft die Offenbarung auch eine Anordnung mit einem Gepäckträger sowie mit einem auf dem Gepäckträger angebrachten Modul, welches entweder zur Anbringung von Zubehörteilen ausgebildet ist oder welches selbst integraler Bestandteil eines Zubehörteils ist.

Zur Anbringung des Moduls kann der Gepäckträger insbesondere mehrere Gewinde umfassen.

Eine Aufnahme, insbesondere ein Gewinde, kann insbesondere im Profil vorgesehen sein. Diese bildet vorzugsweise eine vordere Befestigungsposition.

Bei einer Ausführungsform befinden sich zwei weitere Aufnahmen an der hinteren Befestigungsposition.

Insbesondere befinden sich zwei voneinander beabstandete hintere Aufnahmen, insbesondere Gewinde, im Bereich der hinteren Streben.

Hier muss der Gepäckträger ohnehin in die hinteren Streben übergehen, so dass sich zwei voneinander beabstandete Aufnahmen bereitstellen lassen.

An dem Profil ist dagegen vorzugsweise nur eine mittige Aufnahme vorgesehen.

Sofern kein Modul auf dem Gepäckträger angebracht ist, ist bei dieser Ausführungsform der Erfindung der Gepäckträger nahezu unsichtbar, da das Profil in den Radschützer integriert ist und man somit von dem Gepäckträger optisch lediglich den hinteren nach oben laufenden Bereich sowie die Verbindung mit den zwei hinteren Streben sieht. Aber auch diese Bauteile sind nicht unbedingt einem Gepäckträger zuzuordnen, sondern könnten auch allein der Befestigung von Radschützer und Reflektor dienen.

Die Offenbarung betrifft des Weiteren ein Set mit einem Gepäckträger, wie er vorstehend beschrieben wurde sowie mit einer Mehrzahl von Zwischenstücken unterschiedlicher Länge, welche ausgebildet sind, sich zwischen den Sitzstreben und einem vorderen Ende des Gepäckträgers zu erstrecken.

Insbesondere werden die Zwischenstücke mit den Sitzstreben und dem Gepäckträger verschweißt.

Durch die Bereitstellung von unterschiedlichen Zwischenstücken kann auf sehr einfache Weise ein integrierter Gepäckträger für eine Vielzahl von Rahmenmodellen bereitstellt werden.

Die Offenbarung betrifft des Weiteren ein Modul für einen Gepäckträger, insbesondere für einen Gepäckträger, wie er zuvor beschrieben wurde.

Dieser umfasst eine einzige vordere Aufnahme zur Kopplung mit dem Radschützer sowie zwei hintere voneinander beanstandete Aufnahmen

### Kurzbeschreibung der Zeichnungen

Der Gegenstand der Erfindung soll im Folgenden bezugnehmend auf die Zeichnungen Fig. 1 bis Fig. 21 anhand eines Ausführungsbeispiels der Erfindung erläutert werden.
Fig. 1 ist eine perspektivische Ansicht eines Fahrrads bzw. der relevanten Bauteile des Fahrrads, welches mit einem erfindungsgemäßen Gepäckträger versehen ist.
Fig. 2 ist eine weitere perspektivische Ansicht, in welcher auf dem Gepäckträger ein Modul zur Gepäckaufnahme aufgesetzt ist.
Fig. 3 ist ein mittiger Längsschnitt des Fahrrads im Bereich des Gepäckträgers.
Fig. 4 ist eine Detaildarstellung des Bereichs A der Fig. 1.
Fig. 5 ist eine perspektivische Ansicht auf den hinteren Bereich des Fahrrads, wobei Radschützer, Reflektor und Zwischenstück ausgeblendet sind.
Fig. 6 ist eine perspektivische Ansicht des Gepäckträgers samt Modul.
Fig. 7 ist eine perspektivische Ansicht des Zwischenstücks.
Fig. 8 ist eine perspektivische Ansicht des Gepäckträgers.
Fig. 9 ist eine weitere perspektivische Ansicht des Zwischenstücks.
Fig. 10 ist eine Explosionsdarstellung der Komponenten, welche für eine vordere Befestigungsposition des Radschützers verwendet werden.
**Fig.** 11 ist eine perspektivische Ansicht des zur Befestigung verwendeten Gleitstücks.
**Fig.** 12 und **Fig.** 13 sind perspektivische Ansichten des Radschützers.
**Fig.** 12a und **Fig.** 13a sind Detailansichten des Radschützers.
**Fig.** 14 ist eine perspektivische Ansicht des Mittelbaus des Fahrrads.
**Fig.** 15 ist ein Querschnitt des Fahrrads im Bereich des Gepäckträgers.
**Fig.** 16 ist eine perspektivische Ansicht des Reflektors.
Bezugsnehmend auf Fig. 18 bis Fig. 20 wird eine abgewandelte Ausführungsform eines erfindungsgemäßen Fahrrads erläutert.
Fig. 17 ist eine perspektivische Detailansicht des Bereichs des Gepäckträgers.
Fig. 18 ist eine Detailansicht mit ausgeblendetem Gepäckträger.
Fig. 19 zeigt das Gleitstück und die Befestigungsschraube.
Fig. 20 ist eine Detailansicht der Unterseite des Radschützers.
Fig. 21 ist eine Draufsicht auf die Unterseite eines erfindungsgemäßen Moduls für einen Gepäckträger.

### Detaillierte Beschreibung der Zeichnungen

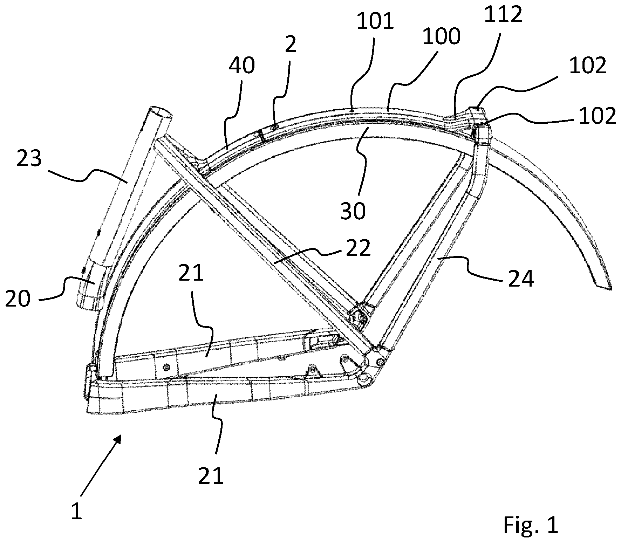

Fig. 1 zeigt in einer perspektivischen Ansicht ein Fahrrad 1 bzw. die für die Anbringung von Gepäckträger 100 und Radschützer 30 relevanten Komponenten des Fahrrads.

Das Hinterrad, die Schaltungs- und Bremskomponenten sowie sämtliche Bestandteile des Fahrrads, welche vor dem Mittelbau angeordnet sind, sind nicht dargestellt.

Das Fahrrad 1 umfasst einen Rahmen 20, welcher u.a. die Kettenstreben 21, die Sitzstreben 22 sowie das Sitzrohr 23 umfasst.

Das Fahrrad 1 ist mit einem integrierten Gepäckträger 100 ausgestattet, welcher mit dem restlichen Rahmen 20 stoffschlüssig verbunden, insbesondere verschweißt, ist.

Der Gepäckträger 100 ist als Mittelsteg ausgebildet, welcher der Krümmung des Radschützers 30 folgt und welcher von einem vorderen Ende bis zu einem hinteren Übergangsstück 112 in einer Vertiefung des Radschützers 30 angeordnet ist.

Somit ist in diesem Bereich der Gepäckträger 100 optischer Bestandteil des Radschützers 30.

Im hinteren Bereich geht der Gepäckträger 100, welcher das Übergangsstück 112 umfasst, in ein Ende über, welches mit den hinteren Streben 24 verbunden ist.

Die hinteren Streben 24 führen zum Ausfallende und sind ebenfalls bei dieser Ausführungsform integraler Bestandteil des Rahmens 20.

Der Radschützer 30 kann an zwei Befestigungspositionen, z.B. beispielsweise mittels Schrauben 2, am Gepäckträger 100 befestigt sein, was im Folgenden noch im Detail ausgeführt wird.

Zwischen dem Gepäckträger 100 und den Sitzstreben 22 ist ein Übergangsstück 40 vorgesehen, das ebenfalls in einer Vertiefung des Radschützers 30 angeordnet ist und das der Krümmung des Radschützers 30 folgt.

Zur Anbringung von Gepäck und Zubehör umfasst der Gepäckträger 100 in diesem Ausführungsbeispiel drei Aufnahmen 101, 102 welche beispielsweise als Gewinde ausgebildet sein können.

Die Aufnahmen 101, 102 können im Wesentlichen auf einer horizontalen Ebene liegen.

Es gibt eine einzige vordere Aufnahme 101 sowie im Bereich der hinteren Streben 24 zwei hintere Aufnahmen 102.

So ist der Gepäckträger 100 zwischen den Sitzstreben 22 und den hinteren Streben 24 optischer Bestandteil des Radschützers 30.

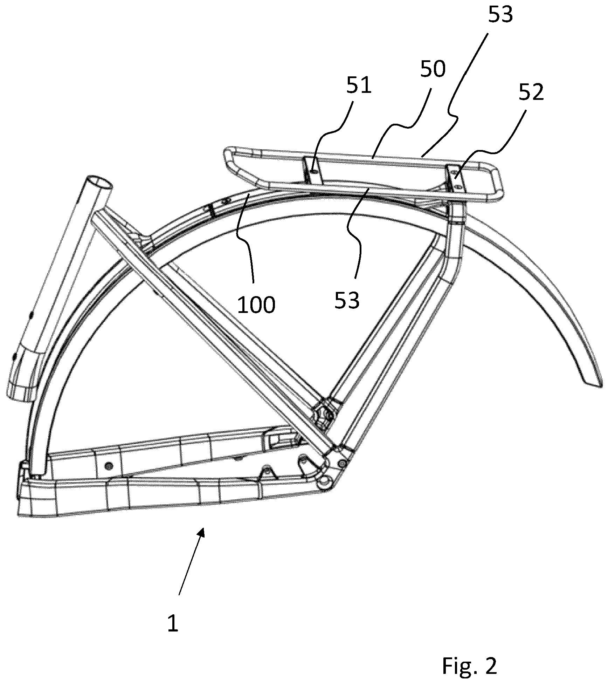

Wie in Fig. 2 dargestellt, ist in diesem Ausführungsbeispiel der Gepäckträger 100 mit einem Modul 50 verbindbar, welches über die Brücken 51 und 52 an den drei Aufnahmen (101, 102) befestigt, insbesondere verschraubt wird.

Das Modul 50 ist in diesem Ausführungsbeispiel als Rahmen mit seitlichen Schienen 53 ausgebildet, so dass Gepäcktaschen an den Schienen 53 eingehängt werden können.

Die Verwendung eines separaten Moduls 50 hat aber auch den Vorteil, dass anders ausgestaltete Module, beispielsweise mit einem Koffer oder einem Kindersitz anstelle des hier dargestellten Moduls 50 verwendet werden können.

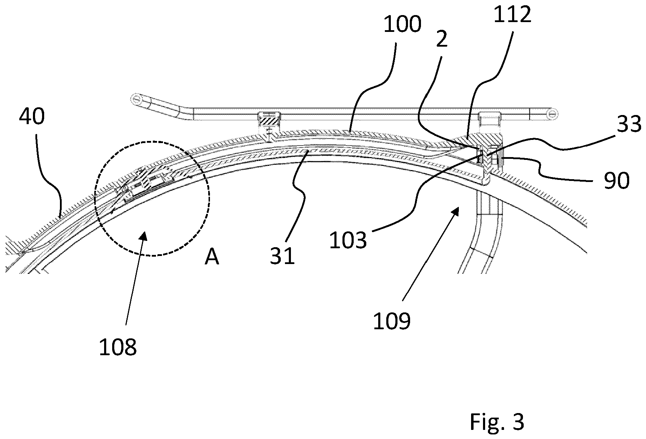

Fig. 3 ist ein mittiger Längsschnitt des Fahrrads im Bereich des Gepäckträgers 100.

Der Gepäckträger 100 ist als Profil ausgebildet, welches über das Übergangsstück 112 in eine hintere Platte 103 übergeht. An der hinteren Platte 103 ist der Radschützer 30 über eine ebenfalls vertikal verlaufende Befestigungslasche 33 angebracht, insbesondere mit einer Schraube 2 angeschraubt.

Weiter dient die hintere Platte 103 der Anbringung eines Reflektors 90.

Der Bereich der hinteren Platte 103 bildet eine zweiten, hinteren Befestigungsposition 109, während sich eine erste, vordere Befestigungsposition 108 im vorderen Bereich des Gepäckträgers 100 befindet.

Vom der hinteren Befestigungsposition 109 ausgehend erstreckt sich das Profil des Gepäckträgers 100 entlang einer Vertiefung 31 des Radschützers 30 bis zum Zwischenstück 40.

Das Zwischenstück 40 ist vorzugsweise mit dem Profil des Gepäckträgers 100 stoffschlüssig verbunden, insbesondere verschweißt.

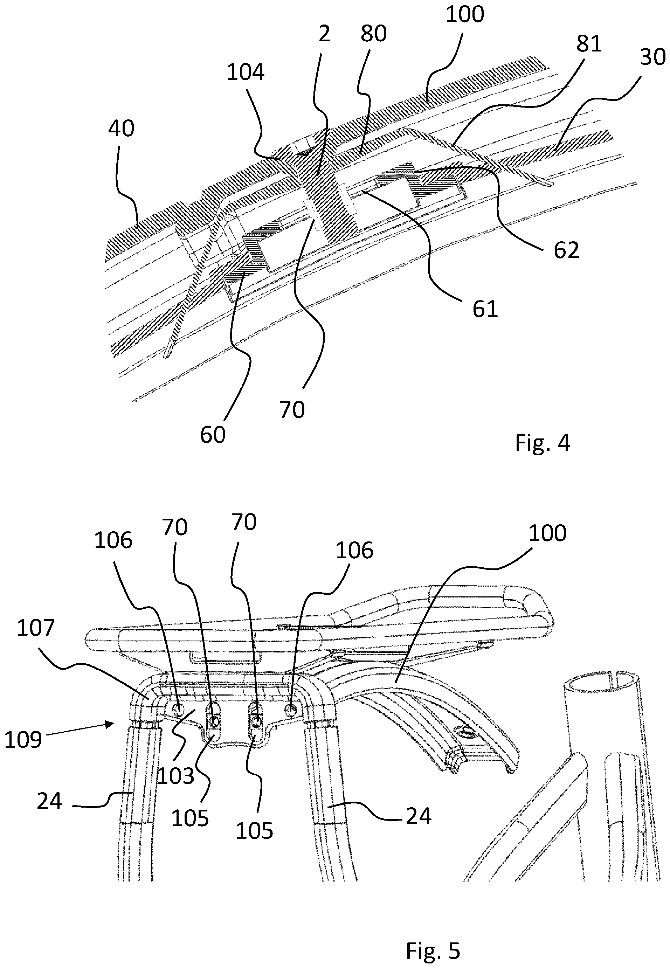

Die erste, vordere Befestigungsposition 108 ist in der Detaildarstellung gemäß Fig. 4 dargestellt.

Der Gepäckträger 100 umfasst ein Durchgangsloch 104, in welches zum Befestigen eine Schraube 2 eingedreht wird.

Die Schraube 2 kann einen Senkkopf umfassen, so dass diese im Wesentlichen bündig mit der Oberseite des Gepäckträgers fluchtet.

Die Schraube 2 dient in diesem Ausführungsbeispiel nicht nur der Befestigung des Radschützers 30, sondern ist zugleich auch eine Stellschraube, über die die Höhe des Radschützers 30 gegenüber dem Gepäckträger 100 an der vorderen Befestigungsposition eingestellt werden kann.

Der Radschützer 30 umfasst eine Öffnung, in die ein Einsatz 60, der beispielsweise aus Kunststoff ausgebildet ist, eingesetzt ist.

Die Öffnung im Radschützer 30 kann eine Stufe für eine Zentrierung des Einsatzes 60 aufweisen. Ebenso hat der Einsatz 60 eine Stufe 62, welche in den Zwischenraum zwischen dem Gepäckträger 100 bzw. dem Profil des Gepäckträgers 100 und dem Radschützer 30 ragt.

In dem Einsatz 60 ist ein Langloch 61 angeordnet, in welchem ein Gleitstück 70, in welches die Schraube 2 eingeschraubt ist, entlanglaufen kann.

So können Form- und Lagetoleranzen in Längsrichtung ausgeglichen werden.

Eine Verstellung der Position des Radschützers 30 quer zur Fahrtrichtung wird in diesem Ausführungsbeispiel durch einen in dem Radschützer 30 quer zur Fahrtrichtung verschiebbaren Einsatz ermöglicht.

Weiter ist zwischen dem Gleitstück 70 und dem Gepäckträger 100 eine Feder 80 vorgesehen.

Die Feder 80 ist bügelförmig mit zwei Armen 81 ausgestaltet und hat ein Durchgangsloch, so dass diese von der Schraube 2 in Position gehalten wird.

Die Feder 80 kann aus Metall oder Kunststoff bestehen.

Die Arme 81 überspannen den Einsatz 60 und liegen im montierten Zustand oben am Radschützer 30 an.

In dieser CAD-Darstellung überschneiden sich die Arme 81 mit dem Radschützer 30. Es versteht sich aber, dass im montierten Zustand die Arme 81 nach oben gebogen sind und mit ihren Enden auf dem Radschützer 30 aufliegen.

Durch die Feder 80 wird Schwingungen des Radschützers 30 entgegengewirkt und somit die Neigung zum Klappern des Radschützers 30 reduziert.

Bei einer alternativen, nicht dargestellten Ausführungsform, ist die Feder als Schraubenfeder ausgebildet.

Fig. 5 ist eine perspektivische Ansicht auf die hintere zweite Befestigungsposition 109.

In diesem Bereich gehen die hinteren Streben 24 in ein Verbindungsstück 107 über.

Das Verbindungsstück 107 ist in diesem Ausführungsbeispiel Teil des Radschützers 100 und kann insbesondere U-förmig ausgebildet sein.

Das Verbindungsstück 107 wird vorzugsweise formschlüssig mit den Streben 24 verbunden, insbesondere verschweißt.

Zur exakten Positionierung kann in diesem Ausführungsbeispiel das Verbindungsstück 107 in die hinteren Streben 24 eingesteckt werden.

Weiter umfasst der Radschützer 100 im Bereich des hinteren Verbindungsstücks 107 die hintere Platte 103.

Die hintere Platte 103 geht in diesem Ausführungsbeispiel mittig von dem U-förmigen Verbindungsstück 107 aus.

Die hintere Platte 103 umfasst zwei sich vertikal erstreckende Langlöcher 105.

Die Langlöcher 105 dienen als Aufnahme für den Radschützer an der zweiten Befestigungsposition 109.

Zur Befestigung des Radschützers sind zwei Gleitstücke 70 vertikal verschiebbar in den Langlöchern 105 angeordnet (im montierten Zustand).

So können an der hinteren Befestigungsposition Form- und Lagetoleranzen in vertikaler Richtung ausgeglichen werden.

Hierzu wird der Radschützer mit einer Befestigungslasche an den Gleitstücken 70 angeschraubt.

Links und rechts seitlich neben den Langlöchern 105 befinden sich zwei Durchgangslöcher 106, die der Anbringung eines Reflektors dienen.

Der Reflektor wird vorzugsweise in den Durchgangslöchern 106 eingerastet.

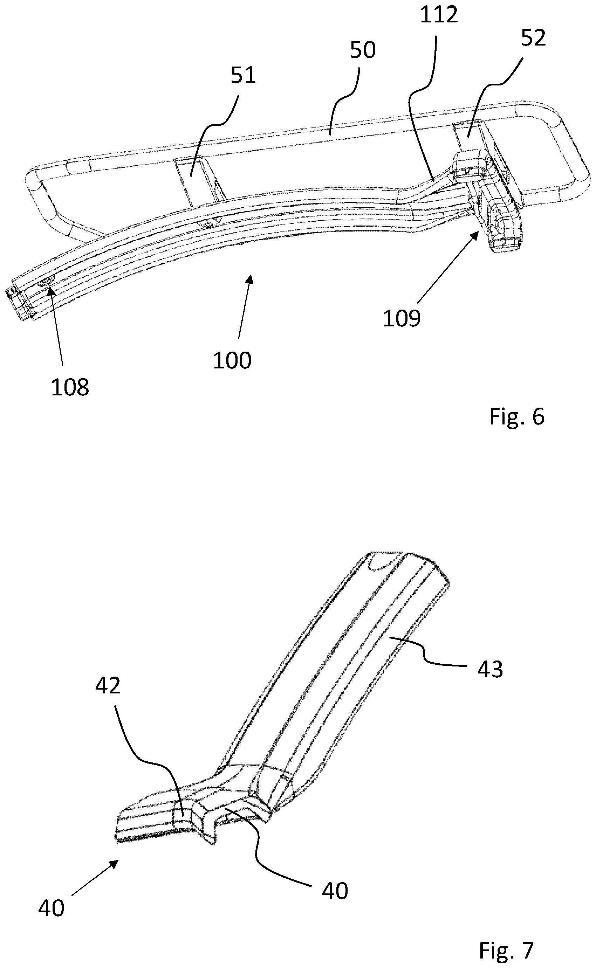

Fig. 6 ist eine perspektivische Ansicht des Gepäckträgers 100 zusammen mit dem Modul 50, welches über die Brücken 51 mit dem Gepäckträger 100 verbunden ist.

In dieser Darstellung ist zu erkennen, dass der Gepäckträger 100 ausgehend von der vorderen Befestigungsposition 108 bis zu einem Übergangsstück 112, in welchem sich der Gepäckträger 100 verbreitert und nunmehr oberhalb des Radschützers angeordnet ist, als im Wesentlichen U-förmiges Profil ausgebildet ist.

Fig. 7 zeigt in einer perspektivischen Ansicht das Zwischenstück 40.

Dieses umfasst eine Verlängerung 43 für das Profil des Gepäckträgers.

Der Querschnitt dieser Verlängerung 43 entspricht vorzugsweise im Wesentlichen dem Querschnitt des Profils des Radschützers.

Auf der dem Gepäckträger gegenüberliegenden Seite umfasst das Profil ein Kopfstück 42, welches in etwa T- oder Y-förmig ausgebildet ist und dementsprechend zwei Arme 41 aufweist, die mit den Sitzstreben verbunden sind.

Die Arme 41 sind ebenfalls als U-förmiges Profil ausgebildet.

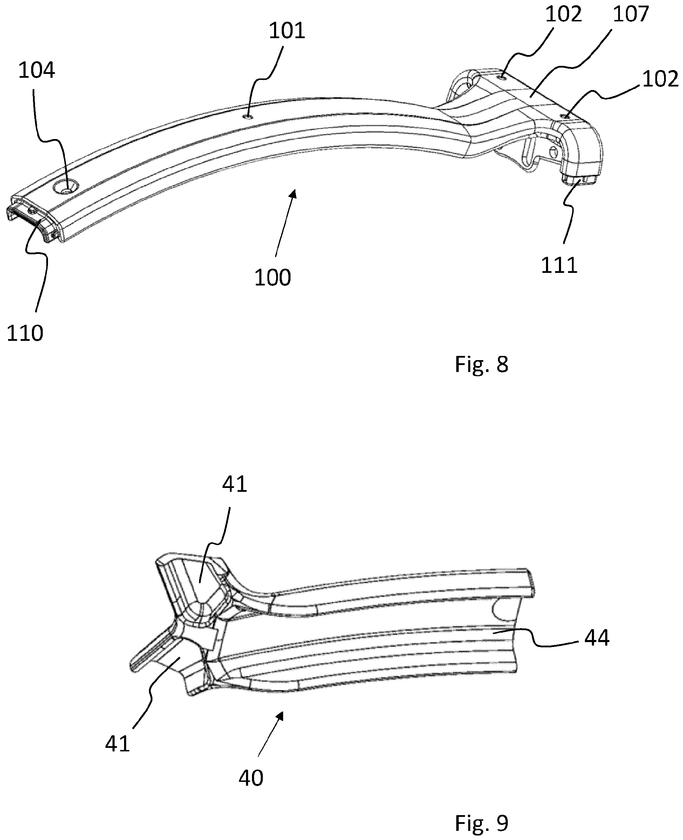

Fig. 8 ist eine weitere perspektivische Ansicht des Gepäckträgers 100. Dargestellt ist insbesondere das Durchgangsloch 104, welches eine umlaufende Phase umfasst, in der der Senkkopf der Schraube verschwindet.

Weiter dargestellt sind die drei als Gewinde ausgestalteten Aufnahmen 101, 102 für das Modul.

Das hintere Verbindungsstück 107 umfasst Verbindungsflansche 111, die in die hinteren Streben eingesteckt werden können.

Das vordere Ende des Gepäckträgers 100 umfasst einen Anschlussflansch 110, welcher im montierten Zustand unter das Profil des Zwischenstücks greift.

An dieser Stelle können Gepäckträger 100 und Zwischenstück verschweißt werden.

Fig. 9 ist eine perspektivische Ansicht auf die Unterseite des Zwischenstücks 40.

Zu erkennen ist, dass die Unterseite 44 sowohl des Profils als auch der beiden Arme 41 U-förmig ausgebildet ist, was Gewicht spart.

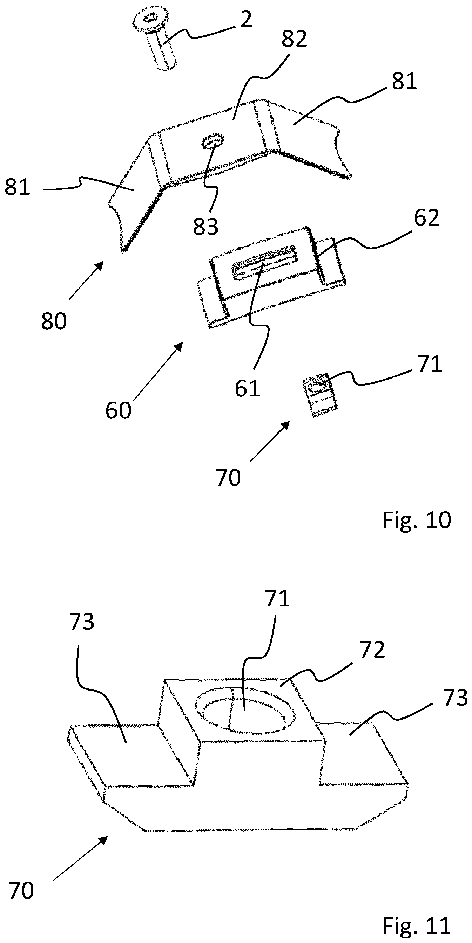

Fig. 10 ist eine Explosionsdarstellung der für die vordere Befestigungsposition des Radschützers am Gepäckträger verwendeten Komponenten.

Der Einsatz 60, welcher eine Stufe 62 aufweist, wird in eine Aussparung des Radschützers eingesetzt.

In den Einsatz 60 wird das Gleitstück 70 eingesetzt, welches ein Gewinde 71 für die Schraube 2 umfasst.

Das Gleitstück 70 gleitet im Langloch 61 des Einsatzes 60. Das Gleitstück 70 kann entlang des Langlochs 61 laufen und mit der Schraube 2 in seiner Höhe verstellt werden. So ist eine Höheneinstellung des Radschützers möglich.

Aufgrund der Hemmung der Schraube 2 im Gewinde 71 sowie aufgrund der Feder 80 verstellt sich die Schraube 2 nicht.

Die Feder 80, welche ein Mittelteil 82 mit einem Durchgangsloch 83 sowie die zwei Arme 81 umfasst, sitzt zwischen dem Gepäckträger und dem Einsatz 60.

Die Schraube 2 führt im montierten Zustand durch das Durchgangsloch 83 und sichert so gleichzeitig die Feder 80.

Fig. 11 ist eine perspektivische Ansicht des Gleitstücks 70.

Das Gleitstück 70 umfasst zwei Arme 73, welche als Anschlag dienen.

Ein Sockel 72, durch den das Gewinde 71 führt, ist dazu ausgebildet, in ein Langloch zu greifen.

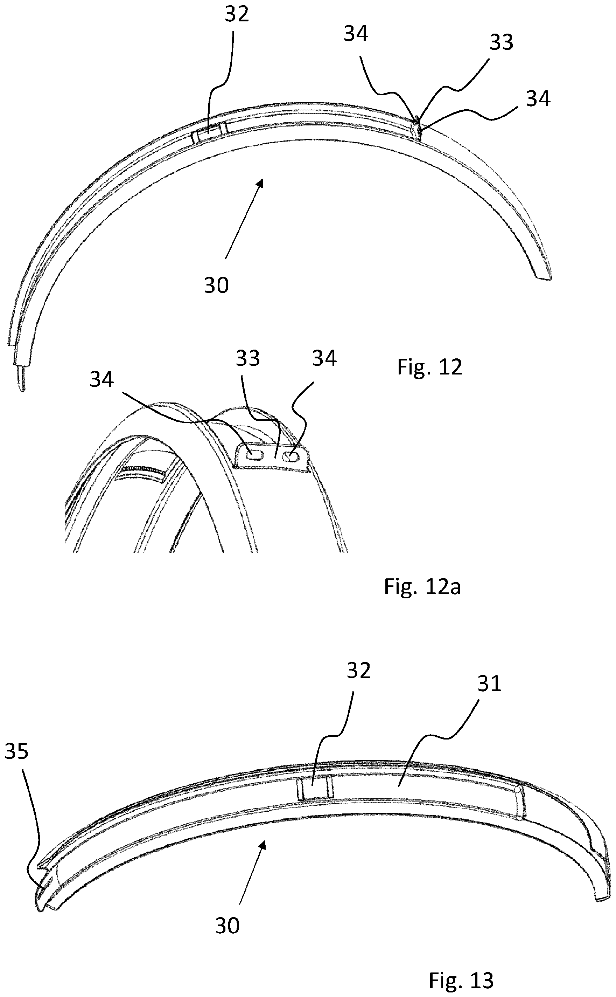

Fig. 12 ist eine perspektivische Ansicht des Radschützers.

Dargestellt ist das im Wesentlichen rechteckige Durchgangsloch 32 für den Einsatz, welcher für die erste Befestigungsposition verwendet wird.

Für die zweite Befestigungsposition am Radschützer umfasst der Radschützer 30 eine nach außen abstehende Befestigungslasche 33 mit zwei Durchgangslöchern 34.

Über die Befestigungslasche 33 wird der Radschützer 30 an der zweiten Befestigungsposition angebracht.

Fig 12a ist eine Detailansicht des Radschützers im Bereich der Befestigungslasche 33.

Die Durchgangslöcher 34 sind als Langlöcher ausgebildet, um eine Verstellung der Position des Radschützers an der zweiten Befestigungsposition auch quer zur Fahrrichtung zu ermöglichen.

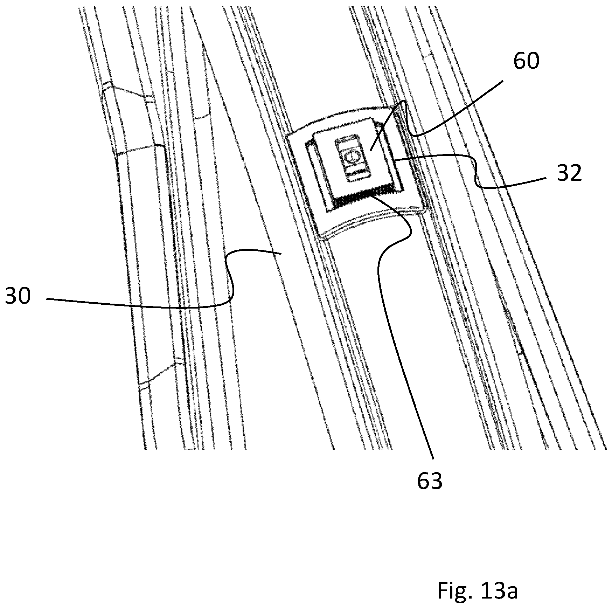

Wie insbesondere in Fig. 13 gut zu erkennen, umfasst der Radschützer angrenzend zum Befestigungsflansch 33 eine Vertiefung 31.

Die Vertiefung 31 ist als umlaufende Einsenkung ausgebildet und nimmt im montierten Zustand sowohl das Profil des Radschützers als auch das Profil des Zwischenstücks auf.

Am vorderen Ende umfasst der Radschützer 30 ein sich um den Umfang erstreckendes Langloch 35, welches der Befestigung am Mittelbau dient.

Fig. 13a ist eine Detailsicht des Radschützers 30 und des Einsatzes 60.

Der Einsatz 60 ist quer zur Fahrtrichtung im Durchgangsloch 32 verschiebbar.

Zwischen Einsatz 60 und dem Durchgangsloch ist eine Rasterung 63 vorhanden, die ein unbeabsichtigtes Verschieben verhindert.

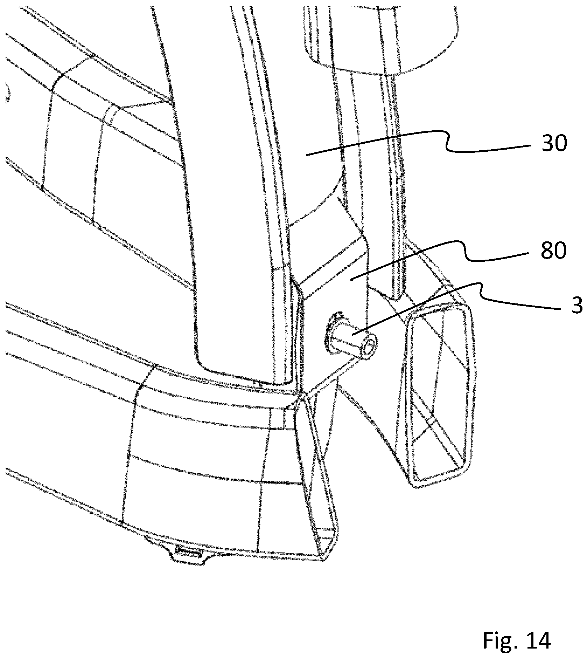

Wie in Fig. 14, einer Detailansicht auf den Mittelbau, dargestellt, kann der Radschützer 30 beispielsweise über eine Schraube mit einem Befestiger 3 verbunden werden.

Der Befestiger 3 kann beispielsweise ein Teil des Rahmens sein oder, wie in diesem Ausführungsbeispiel, das die Teile des Rahmens eines E-Bikes zeigt, im Motorgehäuse (nicht dargestellt) angeordnet sein und ein Gewinde für die Schraube umfassen, mit der der Radschützer befestigt wird.

Auch an dieser weiteren Befestigungsposition ist eine Feder 80 vorgesehen, welche den Radschützer gegenüber dem Rahmen vorspannt.

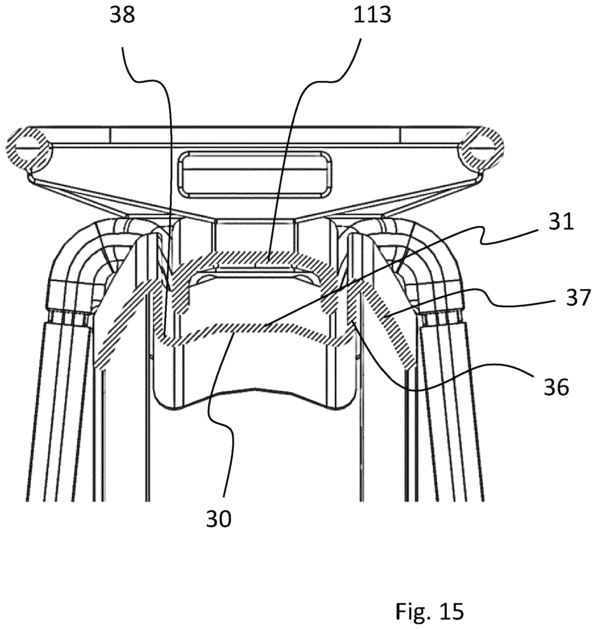

Fig. 15 ist ein Querschnitt des Fahrrads im Bereich des Gepäckträgers.

Zu erkennen ist, dass der Gepäckträger ein U-förmiges Profil 113 umfasst, welches in der Vertiefung 31 des Radschützers 30 angeordnet ist.

Die Vertiefung 31 des Radschützers ist randseitig mit einer Absenkung 38 versehen.

Diese schafft mehr Abstand gegenüber dem Profil 113 des Gepäckträgers. Gleichzeitig hat der Radschützer 30 mittig mehr Abstand vom Rad.

Sodann geht die Vertiefung randseitig über eine Stufe 36 in die Seitenwände 37 über.

Die Seitenwände 37 des Radschützers 30 fluchten in etwa mit dem Profil 113 des Gepäckträgers.

Hierzu ist das Profil 113 des Gepäckträgers randseitig abgeschrägt.

Das Profil 113 des Gepäckträgers ist sowohl in Längsrichtung als auch in Querrichtung vom Radschützer 30 beabstandet. So wird ein Klappern des Radschützers 30 durch Berührungen des Gepäckträgers vermieden.

Der Mindestabstand des Radschützers 30 vom Profil 113 beträgt in der Höhe vorzugsweise zwischen 3 mm und 7 mm und/oder seitlich zwischen 1 mm und 3 mm.

Die Einstellung des Radschützer 30 kann auf einfache Weise vorgenommen werden, ohne das Rad abzunehmen.

Die Stufe 36 des Profils des Radschützers 30 sorgt zudem für eine hohe Steifigkeit des Radschützers.

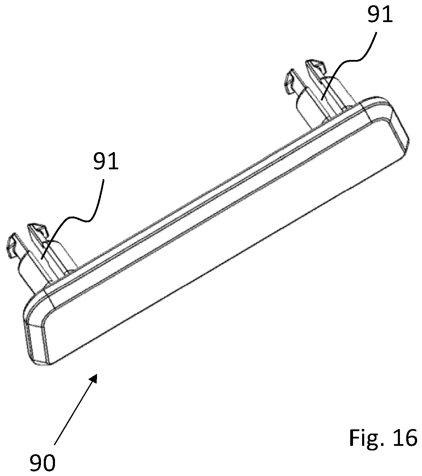

Fig. 16 ist eine perspektivische Ansicht des Reflektors 90.

Der Reflektor 90 kann als Kunststoffspritzgussteil ausgebildet sein.

In diesem Ausführungsbeispiel umfasst der Reflektor 90 zwei voneinander beabstandete Spreizdübel 91.

Mit den Spreizdübeln 91 wird der Reflektor 90 in die Durchgangslöcher der hinteren Platte (104) eingesteckt und die Spreizdübel verrasten in der hinteren Platte.

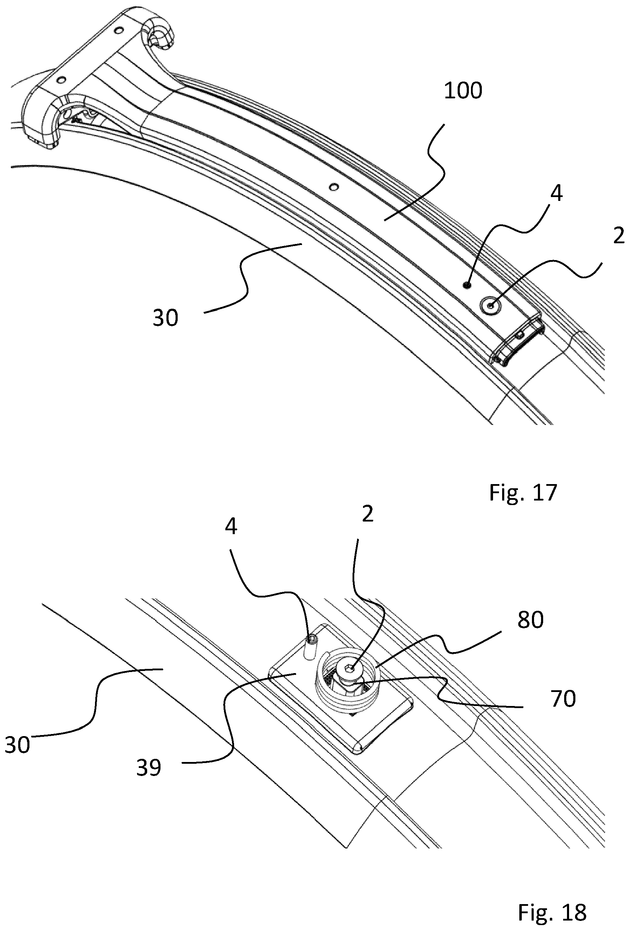

Fig. 17 ist eine Detailansicht des Bereichs des Gepäckträgers 100 bei einer weiteren Ausführungsform der Erfindung.

Im Folgenden sollen im Wesentlichen die Unterschiede dieser Ausführungsform erläutert werden. Die weiteren Merkmale, insbesondere Kontur des Radschützers und des Gepäckträgers, können mit dem vorstehend beschriebenen Ausführungsbeispiel übereinstimmen.

Einzig von außen sichtbarer Unterschied des Gepäckträgers 100 gemäß vorstehend beschriebenem Ausführungsbeispiel ist eine weitere Schraube 4, welche insbesondere eine Madenschraube ist, und welche zusätzlich zur Befestigungsschraube 2 an der ersten, vorderen Befestigungsposition angeordnet ist.

Bei dieser Ausführungsform der Erfindung kann der Radschützer 30 gegen eine Federvorspannung nach oben gedrückt werden und sodann sowohl längs als auch quer zur Fahrtrichtung in seiner Position verstellt werden.

Auch die Höhe des Radschützers 30 gegenüber dem Gepäckträger 100 ist, wie bei vorstehend beschriebenen Ausführungsbeispiel auch, einstellbar, und zwar über die als Stellschraube dienende Schraube 2.

Fig. 18 ist eine Detailansicht des Bereichs der ersten Befestigungsposition, wobei der Gepäckträger ausgeblendet ist.

Dargestellt ist die sich um die Schraube 2 erstreckende Feder 80, welche in diesem Ausführungsbeispiel aber nicht als Blattsondern als Schraubenfeder ausgebildet ist.

Die Feder 80 drückt Radschützer 30 und Gepäckträger 100 auseinander. Im Unterschied zur vorstehend beschriebenen Ausführungsform ist kein verschiebbarer Einsatz in den Radschützer 30 gesetzt, sondern der Radschützer 30 selbst umfasst einen integralen Einsatz 39, welcher als nach oben ragende Einbuchtung ausgebildet ist und in welchem das Gleitstück 70 sowohl längs als auch quer zur Fahrtrichtung verschiebbar ist.

Um den Radschützer 30 endgültig in der gewünschten Position zu fixieren, ist die als Madenschraube ausgebildete Schraube 4 vorgesehen, welche durch den Gepäckträger geschraubt wird und welche beim Eindrehen am Radschützer 30, genauer gesagt am Einsatz 39 des Radschützers 30, zur Anlage kommt.

Ist die Schraube 4 festgezogen, kann der Radschützer 30 nicht mehr gegen die Vorspannung der Feder 80 nach oben gezogen und sodann gegenüber dem Gepäckträger in seiner Position verschoben werden.

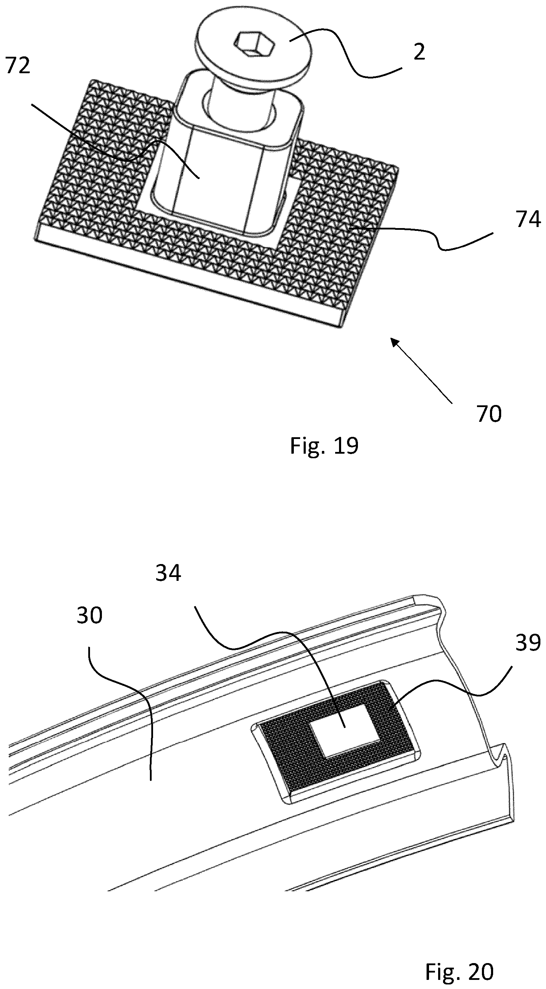

Fig. 19 ist eine Detailansicht des für diese Ausführungsform verwendeten Gleitstücks 70.

Das Gleitstück 70 umfasst einen Sockel 72, in welchen die Schraube 2 zur Höhenverstellung eingedreht ist.

Der Sockel 72 geht gegenüber der Schraube 2 in eine Platte über, welche mit einer Rasterung 74 versehen ist.

Die Rasterung 74 umfasst, beispielsweise pyramidenförmige, Formschlusselemente, welche in komplementär ausgebildete Formschlusselemente des in Fig. 20 dargestellten Einsatzes 39 auf dessen Innenseite greifen.

Wird der Radschützer 30 nach oben gezogen, so ist die Rasterung 74 nicht mehr im Eingriff und der Radschützer 30 kann in Längs- und Querrichtung verschoben werden.

Der Sockel 72 kann sich dabei innerhalb des Durchgangslochs 34 des Radschützers 30 bewegen.

Ist dagegen die in Fig. 17 und Fig. 18 dargestellte Schraube 4 eingedreht, so kann der Radschützer 30 nicht gegen die Federvorspannung hochgedrückt werden und die durch die Rasterung 74 bereitgestellten Formschlusselemente bleiben im Eingriff.

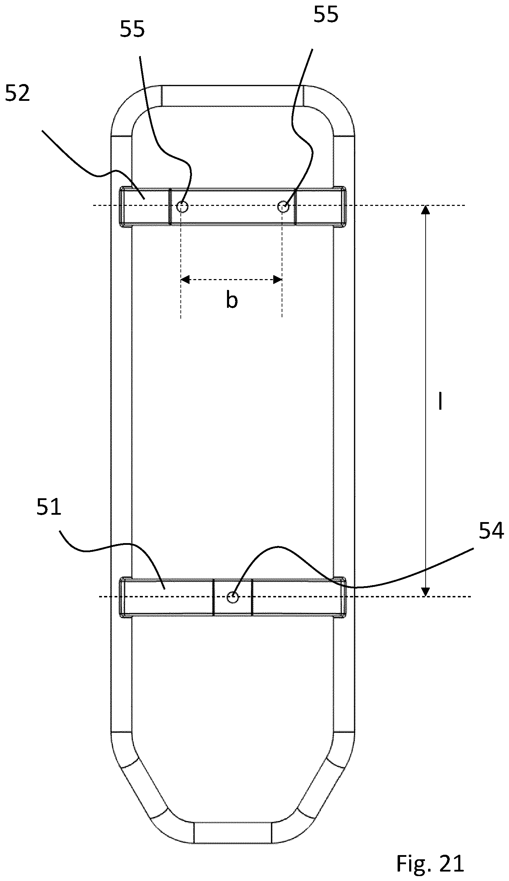

Fig. 21 ist eine Draufsicht auf die Unterseite eines erfindungsgemäßen Moduls 50 für eine Gepäckaufnahme bzw. welches beispielsweise auch als Kindersitz oder Koffer ausgebildet sein kann.

Das Modul 50 kann eine vordere Brücke 51 sowie eine hintere Brücke 52 umfassen.

Das Modul 50 umfasst vorzugsweise genau eine vordere 54 und zumindest zwei, vorzugsweise genau zwei hintere Aufnahmen 55.

Die Aufnahmen 54 und 55 sind vorzugsweise als Durchgangslöcher ausgebildet, insbesondere mit einem Durchmesser zwischen 1 und 10 mm.

Senkrecht zur Durchsteckrichtung der für die Aufnahmen 54, 55 vorgesehenen Befestigungselemente, insbesondere Schrauben, liegen die Aufnahmen 54 und 55 genau auf einer Ebene.

Die hinteren Aufnahmen 55 sind vorzugsweise um einen Abstand b von 40 bis 60 mm, besonders bevorzugt 48 bis 52 mm, voneinander beabstandet.

Die vordere Aufnahme 54 ist von den hinteren Aufnahmen um den Abstand l von 150 mm bis 220 mm, besonders bevorzugt von 190 bis 200 mm, beabstandet.

Die vordere Aufnahme sowie die beiden hinteren Aufnahmen liegen auf einem nach vorne zeigenden spiegelsymmetrischen Dreieck, welches spitzwinklig ausgebildet ist und nach vorne zeigt.

Insbesondere bei Einhaltung der vorstehend genannten Abstände der Aufnahmen 54 und 55 ist es so möglich, das Modul an der vorderen Befestigungsposition alleine innerhalb des Radschützers, genauer gesagt auf dem Profil des Gepäckträgers, zu befestigen.

Wie vorstehend beschrieben, kann so ein Gepäckträger bereitgestellt werden, welcher ohne das Modul optisch Bestandteil des Radschützers ist.

Durch die Erfindung konnte insbesondere ein integrierter Gepäckträger bereitgestellt werden, welcher vielseitig verwendbar, formschön integriert und gleichzeitig leicht und robust ist.

### Bezugszeichenliste

- 1: Fahrrad
- 2: Schraube
- 3: Befestiger
- 4: Schraube (Madenschraube)
- 20: Rahmen
- 21: Kettenstrebe
- 22: Sitzstrebe
- 23: hintere Strebe
- 30: Radschützer
- 31: Vertiefung
- 32: Durchgangsloch für Einsatz 60 oder Gleitstück 70
- 33: Befestigungslasche
- 34: Durchgangsloch
- 35: Langloch
- 36: Stufe
- 37: Seitenwand
- 38: randseitige Absenkung
- 39: Einsatz
- 40: Zwischenstück
- 41: Arm
- 42: Kopfstück
- 43: Verlängerung für Gepäckträger
- 44: Unterseite
- 50: Modul für Gepäckaufnahme
- 51: Brücke
- 52: Brücke
- 53: Schiene
- 54: Aufnahme (Durchgangsloch)
- 55: Aufnahme (Durchgangsloch)
- 60: Einsatz
- 61: Langloch
- 62: Stufe
- 63: Rasterung
- 70: Gleitstück
- 71: Gewinde
- 72: Sockel
- 73: Arm
- 74: Rasterung
- 80: Feder
- 81: Arm
- 82: Mittelteil
- 83: Durchgangsloch
- 90: Reflektor
- 91: Spreizdübel
- 100: Gepäckträger
- 101: vordere Aufnahme für Modul 50
- 102: hintere Aufnahme für Modul 50
- 103: hintere Platte
- 104: Durchgangsloch
- 105: Langloch
- 106: Durchgangsloch für Reflektor
- 107: Verbindungsstück
- 108: erste Befestigungsposition
- 109: zweite Befestigungsposition
- 110: Anschlussflansch
- 111: Verbindungsflansch
- 112: Übergangsstück
- 113: Profil

## Patentansprüche

1. Fahrrad (1), umfassend einen intergierten Gepäckträger (100) und einen Radschützer (30), wobei der Gepäckträger (100) durch ein der Krümmung des Radschützers (30) folgendes Profil (113) ausgebildet ist, und wobei der Radschützer (30) an zumindest einer Befestigungsposition des Gepäckträgers (100) befestigt ist, wobei der Gepäckträger (100) auf der Oberseite des Radschützers (30) sitzt und so der Radschützers (30) unmittelbar an dem der Krümmung des Radschützers folgenden Profil (113) befestigt ist, und wobei der Gepäckträger (100) stoffschlüssig mit dem restlichen Rahmen (20) des Fahrrads (1) verbunden ist.

2. Fahrrad (1) nach dem vorstehenden Anspruch, **dadurch gekennzeichnet, dass** das Profil (113) auf der Oberseite des Gepäckträgers (100) angeordnet ist, wobei vorzugsweise der Gepäckträger (100) und/oder ein auf dem Gepäckträger (100) angeordnetes Modul eine Schiene (53) zur Anbringung einer Fahrradtasche bereitstellt.

3. Fahrrad (1) nach einem der vorstehenden Ansprüche, **dadurch gekennzeichnet, dass** das Profil (113) als Mittelsteg ausgebildet ist, welcher in einer Vertiefung (31) des Radschützers (30) sitzt.

4. Fahrrad (1) nach einem der vorstehenden Ansprüche, **dadurch gekennzeichnet, dass** das Profil (113) einen U-förmigen Querschnitt aufweist,
und/oder dass das Profil (113) einen Umfang von über 20°, vorzugsweise von über 30°, besonders bevorzugt von über 50° und/oder von unter 180°, bevorzugt von unter 90°, besonders bevorzugt von unter 70° einnimmt.

5. Fahrrad (1) nach einem der vorstehenden Ansprüche, **dadurch gekennzeichnet, dass** das Profil (113) mit einem Zwischenstück (40) verbunden, insbesondere verschweißt, ist, welches sich von einem hinteren Ende des Gepäckträgers (100) zumindest bis zu den Sitzstreben (22) erstreckt.

6. Fahrrad (1) nach einem der vorstehenden Ansprüche, **dadurch gekennzeichnet, dass** der Radschützer (30) an zwei Befestigungspositionen mit dem Gepäckträger (100) verbunden ist, insbesondere an einer vorderen Befestigungsposition mit dem Profil (113) und/oder an einer hinteren Befestigungsposition an einer vorzugsweise vertikal ausgerichteten Platte.

7. Fahrrad (1) nach einem der vorstehenden Ansprüche, **dadurch gekennzeichnet, dass** die vordere Befestigungsposition in Längsrichtung und/oder Querrichtung und/oder der Höhe verstellbar ist,
und/oder dass die hintere Befestigungsposition in der Höhe und/oder in Querrichtung verstellbar ist, wobei insbesondere die Verstellbarkeit über zumindest ein in einem Langloch (61) verschiebbares Gleitstück (70) bereitgestellt ist.

8. Fahrrad (1) nach einem der vorstehenden Ansprüche, **dadurch gekennzeichnet, dass** der Gepäckträger (100) eine horizontale Aufnahme (54, 55) für ein Gepäckträgermodul bereitstellt.

9. Fahrrad (1) nach einem der vorstehenden Ansprüche, **dadurch gekennzeichnet, dass** ein Rahmen (20) zum Anbringen von Zubehör, insbesondere zumindest einer Fahrradtasche, mit dem Gepäckträger (100) verbunden ist.

10. Fahrrad (1) nach einem der vorstehenden Ansprüche,
**dadurch gekennzeichnet, dass** eine vertikale Platte eine Aufnahme für einen Reflektor (90) bereitstellt,
und/oder dass in dem Profil (113) zumindest eine Feder (80) angeordnet ist, welches Profil (113) und Radschützer (30) gegeneinander vorspannt,
und/oder dass der Radschützer (30) in einer ersten (108) vorderen und einer zweiten (109) hinteren Befestigungsposition gegenüber dem Gepäckträger (100) in seiner Position durch von außen zugängliche Elemente verstellbar ist, insbesondere ohne das Hinterrad des Fahrrads (1) auszubauen.

11. Fahrrad (1) nach einem der vorstehenden Ansprüche, **dadurch gekennzeichnet, dass** der Radschützer (30) zumindest in einer Befestigungsposition, insbesondere in einer vorderen Befestigungsposition, gegen eine Federvorspannung hochdrückbar und im hochgedrückten Zustand längs und/oder quer zur Fahrtrichtung verschiebbar ist.

## Claims

1. A bicycle (1) comprising an integrated luggage carrier (100) and a mudguard (30),
wherein the luggage carrier (100) is defined by a profile (113) following the curvature of the mudguard (30), and wherein the mudguard (30) is attached to at least one mounting position of the luggage carrier (100), wherein the luggage carrier (100) sits on the upper side of the mudguard (30) and thus the mudguard (30) is attached directly to the profile (113) following the curvature of the mudguard;
and wherein the luggage carrier (100) is connected to the rest of the frame (20) of the bicycle (1) by a material bond.

2. The bicycle (1) according to the preceding claim, **characterized in that** the profile (113) is provided on the upper side of the luggage carrier (100), wherein preferably the luggage carrier (100) and/or a module arranged on the luggage carrier (100) provides a rail (53) for attaching a bicycle bag.

3. The bicycle (1) according to any one of the preceding claims, **characterized in that** the profile (113) is designed as a central web which sits in a recess (31) of the mudguard (30).

4. The bicycle (1) according to any one of the preceding claims, **characterized in that** the profile (113) has a U-shaped cross-section;
and/or that the profile (113) covers an angular range of more than 20°, preferably of more than 30°, most preferably of more than 50°, and/or of less than 180°, preferably of less than 90°, most preferably of less than 70°.

5. The bicycle (1) according to any one of the preceding claims, **characterized in that** the profile (113) is connected, in particular welded, to an intermediate piece (40) which extends from a rear end of the luggage carrier (100) at least as far as to the seat stays (22).

6. The bicycle (1) according to any one of the preceding claims, **characterized in that** the mudguard (30) is connected to the luggage carrier (100) at two fastening positions, more particularly at a front fastening position to the profile (113) and/or at a rear fastening position to a preferably vertically aligned plate.

7. The bicycle (1) according to any one of the preceding claims, **characterized in that** the front fastening position is adjustable in the longitudinal direction and/or in the lateral direction and/or in height;
and/or that the rear fastening position is adjustable in height and/or in the lateral direction, the adjustability being provided in particular via at least one sliding piece (70) that is displaceable in an elongated hole (61).

8. The bicycle (1) according to any one of the preceding claims, **characterized in that** the luggage carrier (100) provides a horizontal seat (54, 55) for a luggage carrier module.

9. The bicycle (1) according to any one of the preceding claims, **characterized in that** a frame (20) for attaching accessories, in particular at least one bicycle bag, is connected to the luggage carrier (100).

10. The bicycle (1) according to any one of the preceding claims, **characterized in that** a vertical plate provides a receptacle for a reflector (90);
and/or that at least one spring (80) is arranged in the profile (113), which biases the profile (113) and the mudguard (30) against each other;
and/or that the mudguard (30) can be adjusted in its position relative to the luggage carrier (100) in a first (108) front and a second (109) rear mounting position by externally accessible elements, in particular without removing the rear wheel of the bicycle (1).

11. The bicycle (1) according to any one of the preceding claims, **characterized in that** the mudguard (30) can be pressed up against a spring preload at least in one mounting position, in particular in a front mounting position, and, when in the pressed-up state, can be displaced longitudinally and/or transversely to the direction of travel.

## Revendications

1. Bicyclette (1) comprenant un porte-bagages intégré (100) et un garde-boue (30), le porte-bagages (100) étant formé d'un profilé (113) suivant la courbure du garde-boue (30), et le garde-boue (30) étant fixé à au moins une position de fixation du porte-bagages (100), le porte-bagages (100) étant situé sur la côté supérieure du garde-boue (30), et le garde-boue (30) étant ainsi fixé directement au profilé (113) suivant la courbure du garde-boue,
et dans lequel le porte-bagages (100) est relié au reste du cadre (20) du bicyclette (1) par une liaison matérielle.

2. Bicyclette (1) selon la revendication précédente, **caractérisé en ce que** le profilé (113) est prévu sur la face supérieure du porte-bagages (100), de préférence le porte-bagages (100) et/ou un module disposé sur le porte-bagages (100) fournissant un rail (53) pour la fixation d'une sacoche de bicyclette.

3. Bicyclette (1) selon l'une quelconque des revendications précédentes, **caractérisé en ce que** le profilé (113) est réalisé sous la forme d'une âme centrale qui s'insère dans un évidement (31) du garde-boue (30).

4. Bicyclette (1) selon l'une quelconque des revendications précédentes, **caractérisée en ce que** le profilé (113) présente une section transversale en forme de U,
et/ou que le profilé (113) couvre une plage angulaire de plus de 20°, de préférence de plus de 30°, particulièrement de préférence de plus de 50°, et/ou de moins de 180°, de préférence de moins de 90°, particulièrement de préférence de moins de 70°.

5. Bicyclette (1) selon l'une quelconque des revendications précédentes, **caractérisé en ce que** le profilé (113) est relié, notamment soudé, à une pièce intermédiaire (40) qui s'étend depuis une extrémité arrière du porte-bagages (100) au moins jusqu'aux haubans de selle (22).

6. Bicyclette (1) selon l'une quelconque des revendications précédentes, **caractérisé en ce que** le garde-boue (30) est relié au porte-bagages (100) au niveau de deux positions de fixation, notamment au niveau d'une position de fixation avant au profilé (113) et/ou au niveau d'une position de fixation arrière à une plaque de préférence alignée verticalement.

7. Bicyclette (1) selon l'une quelconque des revendications précédentes, **caractérisé en ce que** la position de fixation avant est réglable dans le sens longitudinal et/ou dans le sens transversal et/ou en hauteur,
et/ou que la position de fixation arrière est réglable en hauteur et/ou dans le sens transversal, la possibilité de réglage étant notamment assurée par au moins une pièce coulissante (70) déplaçable dans un trou allongé (61).

8. Bicyclette (1) selon l'une quelconque des revendications précédentes, **caractérisé en ce que** le porte-bagages (100) présente un logement horizontal (54, 55) pour un module porte-bagages.

9. Bicyclette (1) selon l'une quelconque des revendications précédentes, **caractérisé en ce qu'**un cadre (20) pour la fixation d'accessoires, en particulier au moins une sacoche de bicyclette, est relié au porte-bagages (100).

10. Bicyclette (1) selon l'une quelconque des revendications précédentes, **caractérisée en ce qu'**une plaque verticale fournit un logement pour un réflecteur (90),
et/ou qu'au moins un ressort (80) est disposé dans le profilé (113), qui sollicite élastiquement le profilé (113) et le garde-boue (30) l'un contre l'autre,
et/ou que le garde-boue (30) peut être réglé dans sa position par rapport au porte-bagages (100) dans une première (108) position de fixation avant et une deuxième (109) position de fixation arrière par des éléments accessibles de l'extérieur, notamment sans démonter la roue arrière du bicyclette (1).

11. Bicyclette (1) selon l'une quelconque des revendications précédentes, **caractérisé en ce que** le garde-boue (30) peut être poussé vers le haut contre une précontrainte de ressort au moins dans une position de fixation, en particulier dans une position de fixation avant, et dans l'état poussé vers le haut peut être déplacé longitudinalement et/ou transversalement à la direction de déplacement.
